# DEMANDE DE BREVET EUROPEEN

(11) **EP 1 361 141 A2**
(43) Date de publication de la demande: **12.11.2003**
(21) Numéro de dépôt: 03291793.2
(22) Date de dépôt: 18.07.2003
(51) Int. Cl.: B62D 33/02

(54) **Rancher pour une carrosserie d'un véhicule industriel**

(30) Priorité: 04.04.2003 FR 0304253
(71) Demandeur: General Trailers France, 91130 Ris Orangis (FR)
(72) Inventeur: Lacrampe, Jérôme, 89000 Auxerre (FR)
(74) Mandataire: Catherine, Alain

(57) **Abrégé**

L'invention concerne un rancher pour une carrosserie d'un véhicule industriel, qui comprend un corps allongé (1) ayant une première extrémité (2) destinée à la fixation du rancher sur une partie supérieure de la carrosserie et une seconde extrémité (3), opposée à la première (2), destinée à la fixation du rancher sur une partie inférieure de la carrosserie. La rancher comprend en outre un levier (4) ayant également une première (5) et une seconde (6) extrémités opposées, ledit levier (4) étant fixé au corps de rancher au moyen d'un axe transversal (7). La seconde extrémité (3) du corps de rancher (1) et la seconde extrémité (6) du levier (4) sont pourvues, chacune, d'un crochet (8, 9), les deux crochets (8, 9) étant orientés en sens opposés afin qu'ils entourent un pied de rancher (10) lorsque le rancher est bloqué sur la carrosserie.

## Description

L'invention concerne un rancher pour un véhicule industriel et un véhicule industriel équipé de tels ranchers.

Sur des véhicules industriels ayant une carrosserie à parois souples, on renforce ces parois par des ranchers, c'est-à-dire des poteaux latéraux mobiles, entre lesquels on insère des planches qui maintiennent la charge que le véhicule doit transporter. La carrosserie d'un véhicule industriel tel un camion, une remorque ou une semi-remorque, sur lequel des ranchers sont utilisés, est constituée essentiellement par un plateau monté sur le châssis du véhicule industriel, et d'au moins quatre montants disposés sur le plateau et reliés à leurs extrémités supérieures par des rails longitudinaux et des traverses. Les ranchers sont suspendus aux rails longitudinaux et fixés à leurs extrémités inférieures sur une partie inférieure de la carrosserie, en général sur un bord de rive latéral du plateau.

Les ranchers comprennent de manière générale un corps allongé ayant une extrémité supérieure destinée à la fixation du rancher sur une partie supérieure de la carrosserie, en général sur un rail longitudinal, et une extrémité inférieure destinée à la fixation du rancher sur une partie inférieure de la carrosserie. Les ranchers sont montés mobiles sur la partie supérieure de la carrosserie, afin de pouvoir être coulissés vers différentes positions le long du bord de rive latéral, tout en étant conçus de manière à pouvoir être immobilisés dans une ou plusieurs positions prédéterminées. A cette fin, les ranchers sont pourvus d'un levier moyennant lequel leur extrémité inférieure est mise sur un pied de rancher et verrouillé ensuite. Ce levier a une première et une seconde extrémité opposées. Il est fixé au corps de rancher à proximité de leurs extrémités inférieures au moyen d'un axe transversal pour pivoter entre une position de blocage du rancher et une position de libération du rancher.

Les ranchers mobiles pliants du type décrit ci-avant sont soumis à des contraintes particulières dont certaines sont liées à leur conception. En effet, selon la conception actuelle, les ranchers sont pourvus à leur extrémité inférieure et plus précisément à l'extrémité inférieure du levier qui dépasse de l'extrémité inférieure du corps du rancher lorsque le rancher est dans sa position de blocage, d'un axe de blocage disposé à l'extrémité inférieure du levier de manière à former un oeillet. Cet axe s'appuie, lorsque le rancher est mis en place dans la carrosserie du véhicule et lorsqu'il est en position de blocage, sur un crochet monté sur le bord de rive latéral du plateau du véhicule. Lorsque l'on débloque le rancher et lorsque l'on pivote le levier dans sa position de libération du rancher, ledit axe reste en appui sur le crochet, et tourne à l'intérieur de celui-ci. Lorsque le rancher est suspendu sur le rail de la partie supérieure de la carrosserie, on sort le levier du crochet afin de pouvoir déplacer ou même enlever le rancher.

La mise en place et l'immobilisation du rancher sont effectuées par simple inversion des manipulations décrites ci-avant.

Cette technique ancienne a fait ses preuves et apporte beaucoup d'avantages aux utilisateurs de ranchers conçus selon cette technique.

Néanmoins, certains désavantages font qu'il est souhaitable d'améliorer ces ranchers.

En effet, en s'appuyant sur un crochet fixé sur la rive du plateau, les ranchers se comportent en quelque sorte comme s'ils étaient posés sur une pointe. Ils ne se trouvent donc pas dans une position très stable. De plus, en l'absence d'une base stable et en raison de leur grande hauteur, qui est de l'ordre de 2,70 m, il est très difficile de tenir les ranchers absolument verticaux jusqu'à ce qu'ils soient coincés dans la partie supérieure de la carrosserie, c'est-à-dire jusqu'à ce qu'ils soient en position de blocage.

Cette fixation en deux points des ranchers entraîne un risque accru de tangage des ranchers non seulement lors de la mise en place des planches entre les ranchers, mais aussi lorsque le véhicule roule. Le tangage des ranchers peut être si grand, lorsque le véhicule roule, qu'il y a un risque de chute des planches destinées à sécuriser la charge du véhicule. A ces désavantages s'ajoute, au fil du temps d'utilisation du véhicule, une usure du rail supérieur et de la tête des ranchers qui ne peuvent qu'accroître le risque de tangage des ranchers.

Le but de l'invention est donc de pallier ces inconvénients.

Le but de l'invention est atteint avec un rancher pour un véhicule industriel ayant une carrosserie, qui comprend un corps allongé ayant une première extrémité destinée à la fixation du rancher sur une partie supérieure de la carrosserie et une seconde extrémité, opposée à la première, destinée à la fixation du rancher sur une partie inférieure de la carrosserie et un levier ayant également une première et une seconde extrémités opposées, ledit levier étant fixé au corps de rancher à proximité de leurs secondes extrémités au moyen d'un axe transversal pour pivoter entre une position de blocage du rancher et une position de libération du rancher.

Conformément à l'invention, la seconde extrémité du corps de rancher et la seconde extrémité du levier sont pourvues, chacune, d'un crochet coopérant avec un pied de rancher fixé sur la partie inférieure de la carrosserie pour bloquer le rancher sur la carrosserie, les deux crochets étant orientés en sens opposés afin qu'ils enveloppent le pied de rancher lorsque le rancher est bloqué sur la carrosserie.

sur Le rancher de l'invention diffère des ranchers utilisés avant l'invention principalement par le fait qu'il coopère avec un pied de rancher comprenant un élément allongé tel un axe monté en chape ou une arête d'appui, rapporté sur la rive latérale et dans lequel vient se prendre un crochet faisant partie du rancher, et plus précisément du levier du rancher. Il en diffère en outre par le type de blocage du rancher. Ce blocage est obtenu en appuyant l'extrémité inférieure du corps du rancher sur la largeur entière du pied du rancher et en appuyant le levier du rancher sur l'élément allongé du pied de rancher. Ainsi, l'extrémité inférieure du rancher repose sur les parties du pied de rancher qui forment la chape moyennant laquelle l'élément allongé est fixé sur le bord de rive latérale ou qui enferment entre elles une partie constituant l'élément allongé ; et en même temps, le rancher est fermement tenu du fait que l'extrémité inférieure du corps de rancher est tirée vers le pied de rancher par l'appui du crochet de l'extrémité inférieure du levier sur l'élément allongé du pied de rancher.

Avantageusement, la chape du pied de rancher a une section transversale en forme de coin ou en forme d'un coin tronqué, et l'extrémité inférieure du corps de rancher a une forme conjuguée. Cette disposition assure non seulement un appui parfait de l'extrémité inférieure sur le pied de rancher mais assure également une position centrée par rapport à l'élément allongé tenu par la chape, ce qui assure une position optimale du rancher sur le pied de rancher.

Selon l'invention, le rancher peut également avoir l'une ou l'autre des caractéristiques ci-après, considérées isolément ou selon toutes leurs combinaisons techniquement possibles :
- Le crochet du levier est orienté de manière à passer entre l'axe de retenue et la carrosserie et le crochet du corps de rancher est orienté de manière à être mis en appui sur le pied de rancher, lorsque le rancher est bloqué sur la carrosserie.
   Cette conception peut être réalisée en formant l'extrémité inférieure du corps de rancher comme un crochet, ou en y fixant un crochet, qui s'étend essentiellement sur toute la largeur de cette extrémité, ou en y formant deux crochets s'étendant à partir des deux bords latéraux du corps de rancher vers l'intérieur. De même, on donne à l'extrémité inférieure du levier une forme telle que l'extrémité inférieure du levier s'appuie sur toute sa largeur sur l'élément allongé du pied de rancher.
- Le crochet du corps de rancher est formé de manière à être mis en appui sur l'axe de retenue, lorsque le rancher est bloqué sur la carrosserie.
- Le crochet du levier est orienté de manière à passer entre l'axe de retenue et la carrosserie et la seconde extrémité du corps de rancher est conformée de manière à constituer elle-même le crochet du corps de rancher.
- La seconde extrémité du corps de rancher est conformée de manière à pouvoir être mise en appui sur le socle du pied de rancher, lorsque le rancher est bloqué sur la carrosserie.
- La seconde extrémité du corps de rancher comprend, sur une face destinée à être en regard avec la carrosserie, au moins deux faces d'appui disposées en Vé pour recevoir en leur milieu le socle du pied de rancher.
- Les deux crochets enveloppent en totalité l'axe de retenue lorsque le rancher est bloqué sur la carrosserie.
   Les efforts de serrage des secondes extrémités du corps de rancher et du levier respectivement agissent transversalement par rapport à l'étendue longitudinale du rancher, c'est-à-dire essentiellement horizontalement lorsque le rancher est mis en place.
- Le rancher comprend un verrou permettant de bloquer la première extrémité du levier sur le corps du rancher lorsque le rancher est bloqué sur la carrosserie.
- L'axe de retenue est monté excentrique par rapport à un axe de perçage des évidements pratiqués dans le socle du pied de rancher et destinés à recevoir les extrémités de l'axe de retenue. Avantageusement, la position excentrique de l'axe de retenue est réglable.

Le but de l'invention est également atteint avec un véhicule industriel dont la carrosserie est équipée de ranchers selon l'invention.

D'autres caractéristiques et avantages du dispositif de l'invention ressortiront de la description ci-après d'un mode de réalisation de l'invention. Cette description est faite en référence aux dessins dans lesquels:

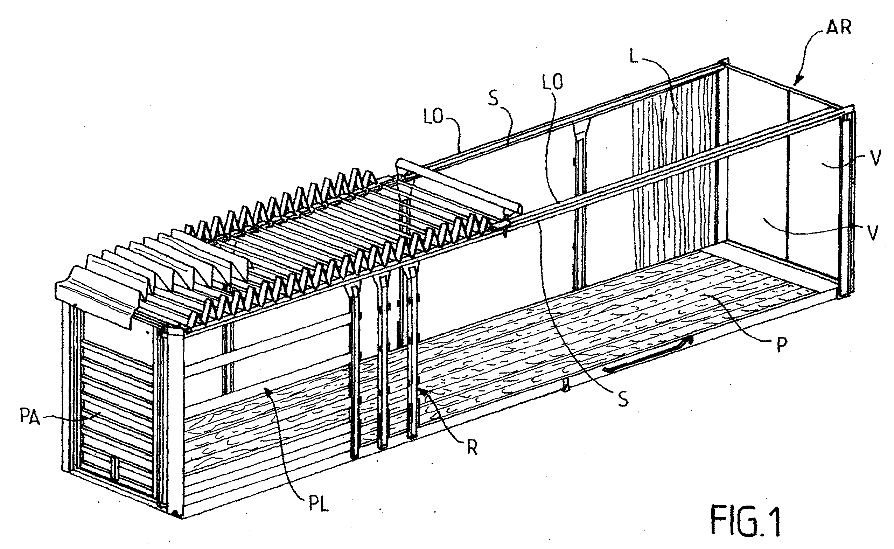

La figure 1 montre une carrosserie d'un véhicule industriel.
La figure 2 montre une partie inférieure d'un rancher selon l'invention et son blocage sur un profilé de rive latérale.
La figure 3 montre la partie inférieure d'un rancher selon l'invention en une vue latérale.
Les figures 4 et 5 montrent l'extrémité inférieure d'un rancher de l'invention et un pied de rancher en une vue latérale.
Les figures 6 et 7 montrent un pied de rancher selon l'invention monté sur un bord de rive latéral d'un véhicule.
Les figures 8 et 9 représentent une variante de montage du pied de rancher selon l'invention.

Les ranchers R de l'invention sont utilisés sur des véhicules industriels ayant une carrosserie à parois souples pour contribuer à renforcer la résistance des parois latérales souples de tels véhicules. La carrosserie consiste essentiellement en un plancher P monté sur le châssis du véhicule industriel, une paroi avant PA, une paroi AR constitué en général par une porte arrière ayant deux vantaux V et des parois souples latérales L formées par des bâches. Les bâches sont renforcées par les ranchers R et des planches PL disposées entre les ranchers et entre des montants d'angle de la carrosserie et le rancher le plus proche.

Les ranchers R sont montés coulissants dans des rails longitudinaux S constitués par ou montés sur des profilés longitudinaux LO formant des parties supérieures de la carrosserie.

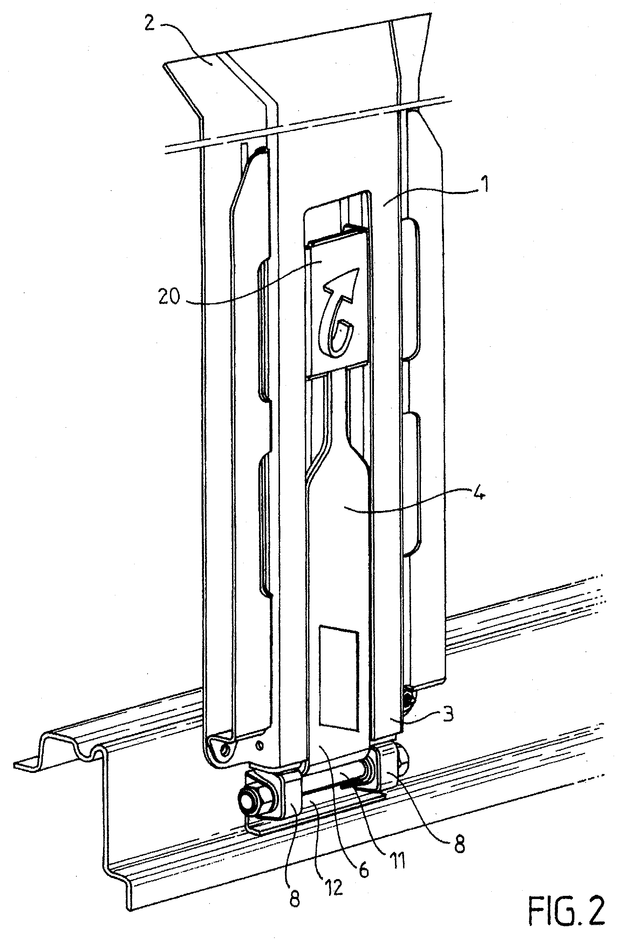

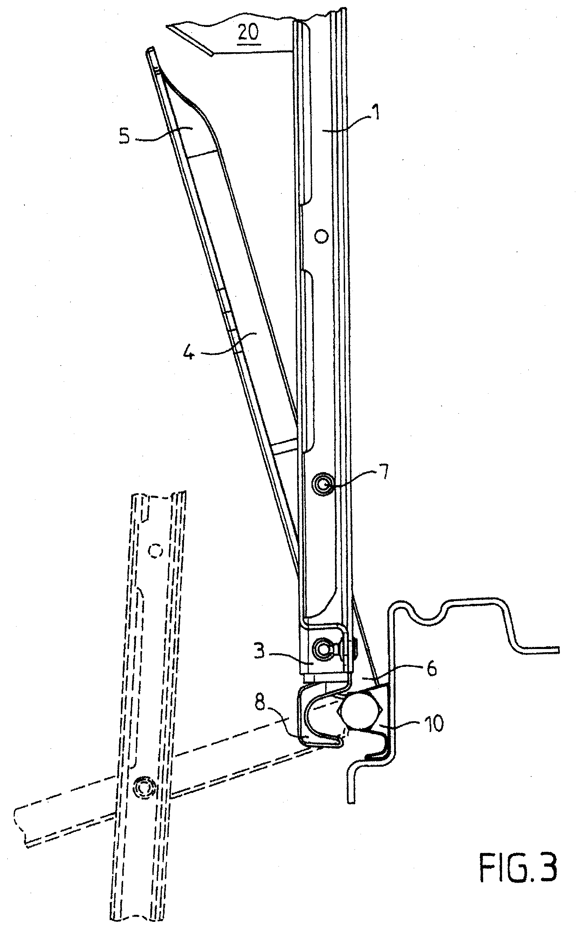

Le rancher de l'invention représenté sur la figure 2 comprend un corps allongé 1 ayant une première extrémité 2 destinée à la fixation du rancher sur la partie supérieure de la carrosserie et une seconde extrémité 3, opposée à la première extrémité 2, destinée à la fixation du rancher sur une partie inférieure de la carrosserie. Le rancher comprend en outre un levier 4 ayant également une première extrémité 5 et une seconde extrémité 6 opposée. Le levier 4 est fixé au corps de rancher à proximité de leurs secondes extrémités 3, 6 au moyen d'un axe transversal 7 représenté sur la figure 3, pour pivoter entre une position de blocage du rancher représentée sur la figure 2 et une position de libération du rancher représentée en pointillés sur la figure 3. Le levier 4 est immobilisé par un verrou 20, lorsque le rancher est en position de blocage.

La seconde extrémité 3 du corps de rancher 1 est pourvue de deux crochets 8 disposés en alignement avec les bords latéraux du corps de rancher, et la seconde extrémité 6 du levier 4 est pourvue d'un crochet 9. Les crochets 8 et 9 coopèrent avec un pied de rancher 10 fixé sur la partie inférieure de la carrosserie, en général sur une rive de bord latéral du rancher. Les crochets 8, 9 coopèrent avec le pied de rancher pour bloquer le rancher sur la carrosserie. A cet effet, les deux crochets 8 et le crochet 9 sont orientés en sens opposés afin que, en quelque sorte comme les mâchoires d'une pince, ils enveloppent le pied de rancher 10 lorsque le rancher est bloqué sur la carrosserie.

Selon une variante non représentée dans les dessins, la seconde extrémité 3 du corps de rancher 1 est pourvue d'un crochet unique remplissant la même fonction que les deux crochets 8. La largeur de ce crochet unique correspond alors à la largeur entière du corps de rancher.

Le pied de rancher 10 est formé essentiellement d'un axe de retenue 11 monté sur la carrosserie moyennant un socle 12. Le socle 12 retient l'axe 11 en chape par deux parties proéminentes 13, 14 pourvue, chacune, d'un évidement 16, 17 recevant les extrémités de l'axe de retenue 11. Le socle 12 comporte une avancée 15 destinée à faciliter le montage du pied de rancher 10 sur la carrosserie.

La figure 3 montre un rancher de l'invention en une vue latérale en début de déblocage. Cette figure montre particulièrement que les crochets 8 du corps de rancher 1 sont orientés de manière à être mis en appui sur le pied de rancher 10 lorsque le rancher est bloqué sur la carrosserie et que le crochet 9 du levier 4 est orienté de manière à passer entre l'axe de retenue 11 et la carrosserie lorsque le rancher est mis en place. On comprend également grâce à cette figure 3 que, sans sortir du principe de l'invention, le corps de rancher 1 puisse être conformé de manière à constituer lui-même le crochet unique ou les deux crochets 8 et que le crochet unique ou les crochets 8 puissent être une (ou des) pièce(s) rapportée(s) au corps de rancher 1.

Lorsque le corps de rancher est muni d'un crochet unique, celui-ci peut être formé de manière à être mise en appui sur l'axe de retenue 11 lorsque le rancher est bloqué sur la carrosserie. L'ouverture du crochet unique et notamment sa forme et sa largeur intérieures sont alors adaptées à la forme et aux dimensions de la partie visible de l'axe de retenue 11, c'est-à-dire de la partie de l'axe de retenue 11 non emprisonnée par les parties proéminentes 13, 14.

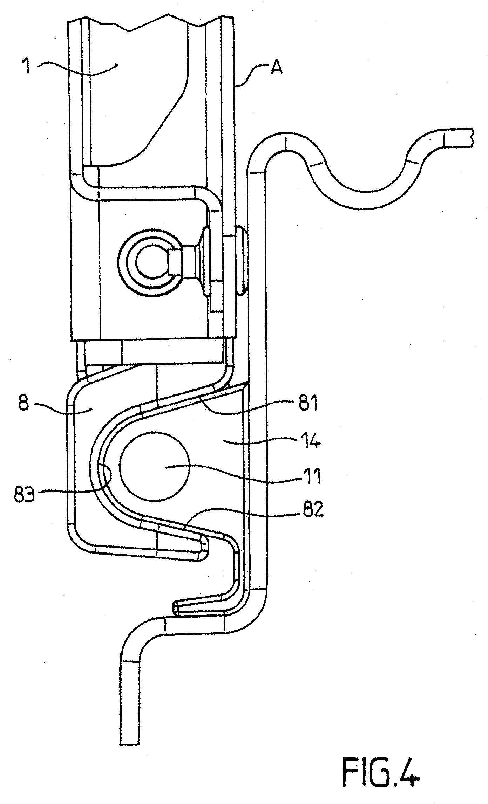

Toutefois, dans le but de donner au corps de rancher une assise la plus large possible, il est préférable de former la seconde extrémité 3 du corps de rancher avec un crochet unique ou deux crochets 8, ou de la pourvoir avec de tels crochets, dont les bords extérieurs sont alignés avec les bords latéraux du corps de rancher ou, pour le moins, sont proches de la prolongation de ces bords. Le rancher représenté sur les figures 2 à 5 correspond à cette conception. De plus, le crochet 9 du levier 4 est toujours orienté de manière à passer entre l'axe de retenue 11 et la carrosserie lorsque le rancher est mis en place, et la seconde extrémité 3 du corps de rancher 1 est conformée de manière à pouvoir être mise en appui sur le socle du pied de rancher 10, lorsque le rancher est bloqué sur la carrosserie. Cette dernière disposition est représentée plus particulièrement en détail sur la figure 4.

En effet, la figure 4 montre que la seconde extrémité 3 du corps de rancher 1 comprend sur la face A destinée à être en regard avec la carrosserie, lorsque le rancher est mis en place sur la carrosserie, au moins deux faces d'appui 81, 82 disposées en Vé pour recevoir en leur milieu le socle du pied de rancher 10 et notamment ses parties proéminentes 13, 14. Lorsque la seconde extrémité du corps de rancher 1 est formée de manière à présenter un évidement allongé unique, celui-ci est délimité par une face d'appui supérieure 81 et une face d'appui inférieure 82 ainsi qu'une surface arquée 83, qui s'étendent toutes les trois sur la largeur entière du corps de rancher.

Lorsque la seconde extrémité 3 du corps de rancher 1 est pourvue de deux crochets 8 ou est conformée de manière à constituer elle-même ces crochets 8, comme cela est représenté sur la figure 2, chacun de ces crochets 8 comprend une face d'appui supérieure 81 et une face d'appui inférieure 82. En ce cas, la seconde extrémité 3 du corps de rancher comprend, sur la face A destinée à être en regard avec la carrosserie, quatre faces d'appui 81, 82 disposées en Vé pour recevoir en leur milieu le socle du pied de rancher 10.

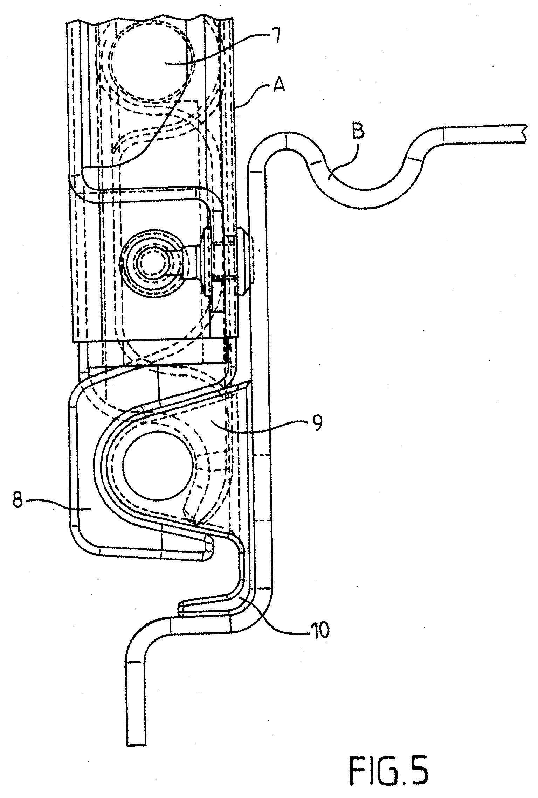

La figure 5 reprend les enseignements de la figure 4 tout en montrant en pointillés les parties du levier 4 disposées à l'intérieur du corps de rancher 1 et entre les parties proéminentes 13, 14 dudit pied de rancher 10. Cette figure montre plus particulièrement que dans le mode de réalisation représenté, les deux crochets 8 et le crochet 9 enveloppent, en quelque sorte, le pied de rancher 10, puisqu'ils prennent le pied de rancher 10 en leur milieu comme le feraient les mâchoires d'une pince, lorsque le rancher est bloqué sur la carrosserie.

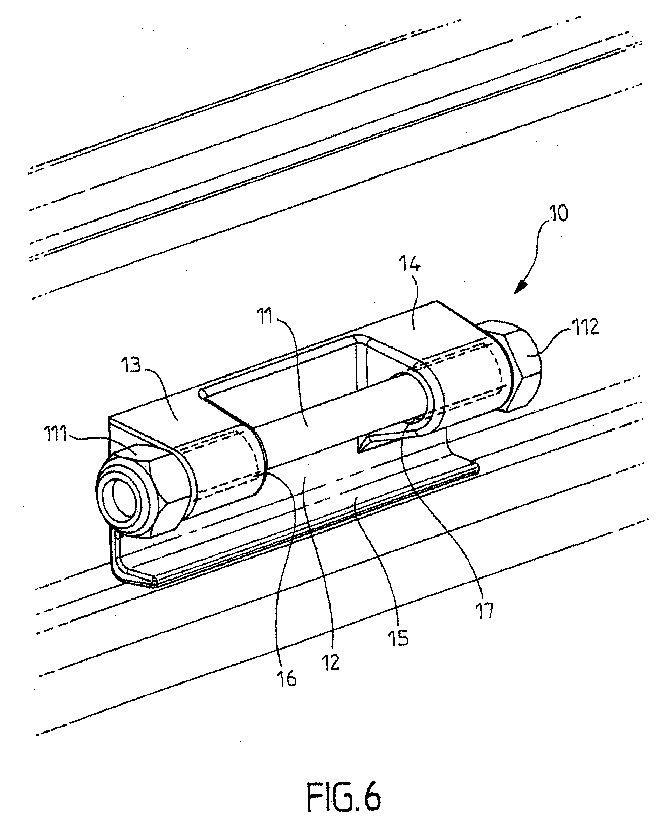

Le pied de rancher 10 est représenté sur la figure 6 en plus de détails. On y voit l'axe de retenue 11 monté sur la carrosserie moyennant le socle 12 qui retient l'axe 11 en chape par les deux parties proéminentes 13, 14. Les extrémités opposées de l'axe 11 sont filetées et introduites dans les évidements 16, 17 et en dépassent du côté extérieur du pied de rancher sur une longueur suffisante pour recevoir des écrous auto-blocants 111, 112 moyennant lesquels l'axe de retenue 11 est immobilisé dans le pied de rancher. Le socle 12 comporte par ailleurs une avancée 15 destinée à faciliter le montage du pied de rancher 10 sur la carrosserie.

Lors du déplacement du véhicule, le rancher 1 est soumis à diverses formes pouvant produire son balancement par rapport à la carrosserie. Il en résulte des bruits et une usure du rancher 1. Pour l'éviter, l'axe 11 est avantageusement excentrique. Cette excentricité peut être obtenue en formant l'axe en trois parties, à savoir une partie centrale ayant un premier axe de rotation et deux parties d'extrémité ayant un second axe de rotation transversalement espacé du premier axe. L'excentricité de l'axe de retenue 11 peut également être obtenue par un montage de l'axe 11 dans les évidements 16, 17 moyennant des douilles excentriques. Le réglage de l'excentricité lors du montage permet d'améliorer le plaquage du rancher sur le pied de rancher et d'éliminer tout jeu parasite et donc les effets mentionnés plus haut.

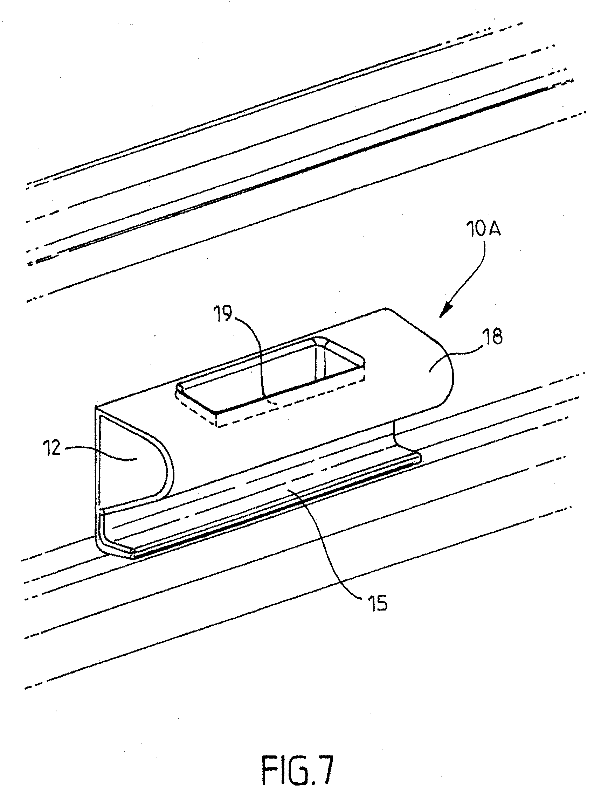

Selon une variante représentée sur la figure 7, on peut réaliser l'invention en utilisant un pied de rancher 10A comprenant, à la place de l'axe de retenue 11 et de la chape 13, 14 du pied 10, une tôle 18 conformée de manière à donner au pied de rancher une forme correspondant à celle des parties proéminentes du pied 10 et à présenter une arrête d'appui 19 sur laquelle peut s'accrocher le levier 4 du rancher 1. La tôle 18 est solidaire du socle 12. Elle comporte sur la face supérieure une ouverture ayant un bord dont au moins une partie 19 en regard de la carrosserie est rectiligne. Cette partie rectiligne 19 constitue une arête d'appui pour le levier 4 du rancher. Le socle 12 et la tôle 18 sont avantageusement formés à partir d'une tôle unique. La partie inférieure du levier 4 comporte alors une fente allongée conjuguée de cette arrête 19 et coopérant avec elle.

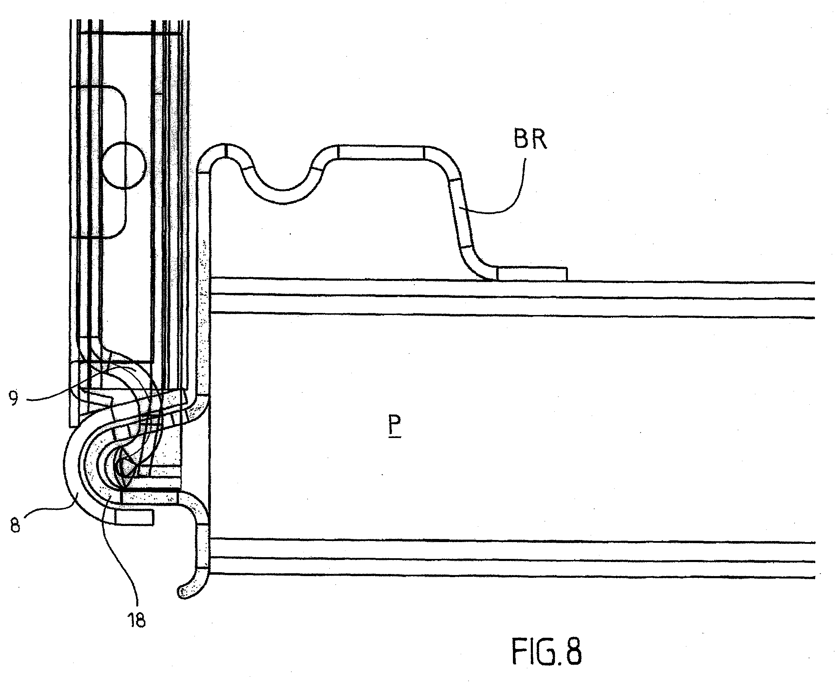

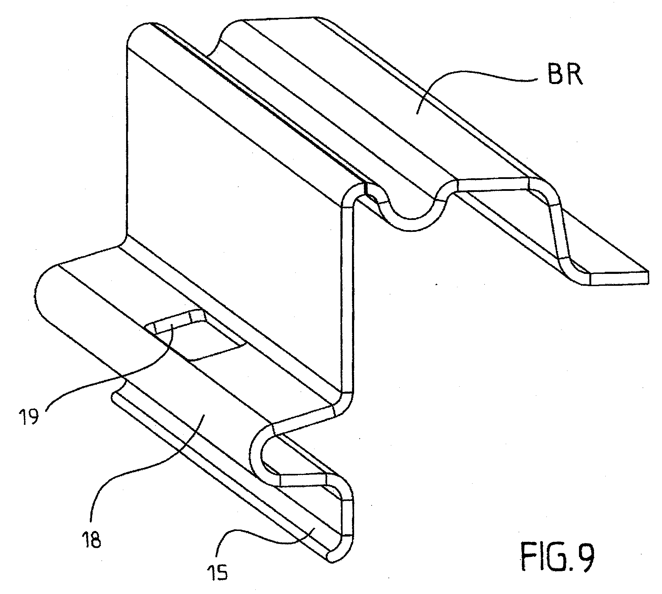

Selon une autre variante représentée sur les figures 8 et 9, on peut réaliser l'invention en intégrant le pied de rancher 10A, plus précisément la tôle 18 sur laquelle peut s'accrocher le levier 4 du rancher 1, dans le profilé constituant le bord de rive du plateau P. Le profilé et la tôle 18 forment ainsi une seule pièce référencée BR pour la distinguer du profilé B de la figure 5 sur lequel le pied de rancher 10A est rapporté.

## Revendications

1. Rancher pour un véhicule industriel ayant une carrosserie, ledit rancher comprenant un corps allongé (1) ayant une première extrémité (2) destinée à la fixation du rancher sur une partie supérieure de la carrosserie et une seconde extrémité (3), opposée à la première (2), destinée à la fixation du rancher sur une partie inférieure de la carrosserie et un levier (4) ayant également une première (5) et une seconde (6) extrémités opposées, ledit levier (4) étant fixé au corps de rancher à proximité de leurs secondes extrémités (3, 6) au moyen d'un axe transversal (7) pour pivoter entre une position de blocage du rancher et une position de libération du rancher, **caractérisé en ce que** la seconde extrémité (3) du corps de rancher (1) et la seconde extrémité (6) du levier (4) sont pourvues, chacune, d'au moins un crochet (8, 9) coopérant avec un pied de rancher (10, 10A) fixé sur la partie inférieure de la carrosserie pour bloquer le rancher sur la carrosserie, les deux crochets (8, 9) étant orientés en sens opposés afin qu'ils enveloppent le pied de rancher (1.0) lorsque le rancher est bloqué sur la carrosserie.

2. Rancher selon la revendication 1 conformé pour coopérer avec un pied de rancher (10) comportant un élément allongé (11, 19) fixé sur la carrosserie moyennant un socle (12), **caractérisé en ce que** le crochet (9) du levier (4) est orienté de manière à passer entre l'élément allongé (11 ) et la carrosserie et que le crochet (8) du corps de rancher (1) est orienté de manière à être mis en appui sur le pied de rancher (10), lorsque le rancher est bloqué sur la carrosserie.

3. Rancher selon la revendication 2 dans lequel l'élément allongé est un axe de retenue (11), **caractérisé en ce que** le crochet (8) du corps de rancher (1) est formé de manière à être mis en appui sur l'axe de retenue (11), lorsque le rancher est bloqué sur la carrosserie.

4. Rancher selon la revendication 1 conformé pour coopérer avec un pied de rancher (10) comportant un axe de retenue (11) fixé sur la carrosserie moyennant un socle (12 - 14), **caractérisé en ce que** le crochet (9) du levier (4) est orienté de manière à passer entre l'axe de retenue (11) et la carrosserie et que la seconde extrémité (3) du corps de rancher (1) est conformée de manière à constituer elle-même le crochet (8) du corps de rancher (1).

5. Rancher selon la revendication 4, **caractérisé en ce que** la seconde extrémité (3) du corps de rancher (1) est conformée de manière à pouvoir être mise en appui sur le socle (12 - 14) du pied de rancher (10), lorsque le rancher est bloqué sur la carrosserie.

6. Rancher selon la revendication 4 ou 5, **caractérisé en ce que** la seconde extrémité (3) du corps de rancher (1) comprend, sur une face (A) destinée à être en regard avec la carrosserie, au moins deux faces d'appui (81, 82) disposées en Vé pour recevoir en leur milieu le socle (12 - 14) du pied de rancher (10).

7. Rancher selon l'une quelconque des revendications précédentes, **caractérisé en ce que** les crochets (8, 9) du corps de rancher (1 ) et du levier (4) enveloppent en totalité l'axe de retenue (10) lorsque le rancher est bloqué sur la carrosserie.

8. Rancher selon l'une quelconque des revendications précédentes, **caractérisé en ce qu'**il comprend un verrou (20) permettant de bloquer la première extrémité (5) du levier (4) sur le corps (1) du rancher lorsque le rancher est bloqué sur la carrosserie.

9. Rancher selon l'une quelconque des revendications 1 à 8, **caractérisé en ce que** l'axe de retenue (11) est monté excentrique par rapport au socle (12) du pied de rancher (10).

10. Véhicule industriel, **caractérisé en ce qu'**il est équipé de ranchers selon l'une quelconque des revendications 1 à 9.
